# EUROPEAN PATENT SPECIFICATION

(11) **EP 0 537 953 B1**
(45) Date of publication and mention of the grant of the patent: **07.05.1997**
(21) Application number: 92309222.5
(22) Date of filing: 09.10.1992
(51) Int. Cl.: B29C 45/26, B29C 45/17, B29L 17/00

(54) **Metal mould device to mould a disc substrate**
Metallische Formvorrichtung zum Formen eines Plattensubstrats
Dispositif de moule métallique pour mouler un substrat de disque

(30) Priority: 12.10.1991 JP 292558/91; 08.01.1992 JP 19445/92; 21.04.1992 JP 126662/92
(43) Date of publication of application: 21.04.1993
(60) Divisional application: 95118668.3
(73) Proprietor: SONY CORPORATION, Tokyo 141 (JP)
(72) Inventor: Kudo, Junichiro, c/o Patents Division Sony Corp., Tokyo 141 (JP); Shimizu, Jun, c/o Patents Division Sony Corp., Tokyo 141 (JP)
(74) Representative: Purvis, William Michael Cameron

(56) References cited:
- EP-A- 0 047 645
- EP-A- 0 051 253
- EP-A- 0 177 991
- PATENT ABSTRACTS OF JAPAN vol. 10, no. 115 (M-474)(2172) 30 April 1986 & JP-A-60 245 529 (SUMITOMO JUKIKAI KOGYO)
- PATENT ABSTRACTS OF JAPAN vol. 11, no. 218 (M-607)(2665) 15 July 1987 & JP-A-62 035 820 (MEIKI CO.)
- PATENT ABSTRACTS OF JAPAN vol. 12, no. 296 (M-731)(3143) 12 August 1988 & JP-A-63 074 618 (HITACHI)
- PATENT ABSTRACTS OF JAPAN vol. 16, no. 105 (P-1325) 16 March 1992 & JP-A-03 280 279 (RICOH)

## Description

The invention relates to a metal mould device to mould a disc substrate as defined by the features of the preamble portion of appended claim 1. Such a mould is for instance known from EP-A-0 177 991.

Such a substrate may be a recording medium for information signals, such as an optical disc or a magneto-optical disc. The metal mould device may be used to mould a disc substrate by moulding synthetic resin, such as polycarbonate resin.

An optical disc has hitherto been proposed which makes use of a disc substrate formed of synthetic resin such as light-transmitting polycarbonate resin. This kind of optical disc may be exemplified by a read-only type disc and a magneto-optical disc with which it is possible to re-write previously recorded information signals. The read-only optical disc includes a disc substrate having its major surface formed with a pattern of recesses and lands corresponding to information signals, such as predetermined musical sound signals, or pits, and a reflective film produced by e.g. vacuum deposition of aluminum or like material. The overwrite type magneto-optical disc, capable of re-writing information signals, has a signal recording layer having a magnetic film on its major surface on which a pre-groove constituting a recording track for recording predetermined information signals is formed.

A disc substrate, formed of synthetic resin and constituting an optical disc or a magneto-optical disc as described above, can be produced using a metal mould device and injection moulding.

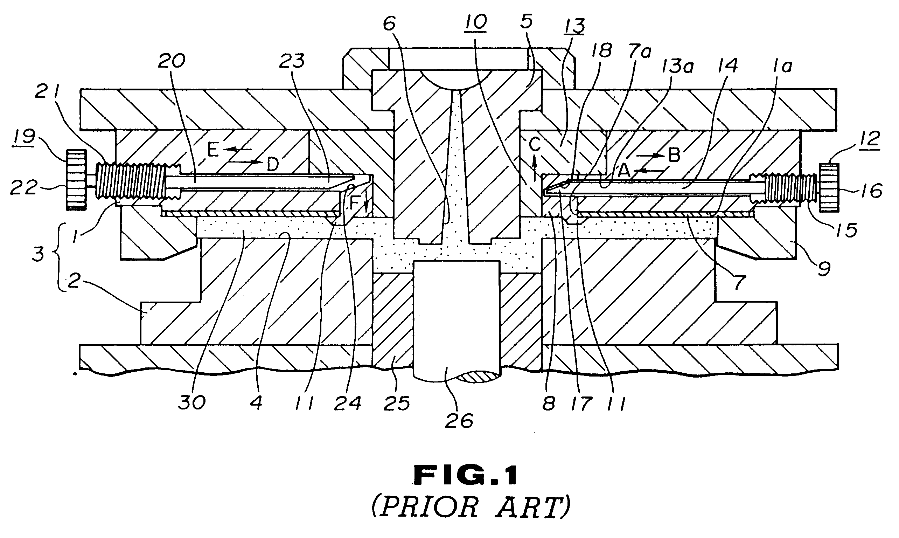

A metal mould device of previously proposed kind to mould a disc substrate can be formed as shown in Figure 1 of the accompanying drawings and is made up of a fixed metal mould 1 and a movable metal mould 2 placed facing the fixed metal mould 1. A mould cavity 4 corresponding in shape to the disc substrate 30 to be moulded is defined between the fixed mould 1 and the movable mould 2 making up a metal mould 3.

At a mid position of the fixed metal mould 1, there is provided a sprue bushing 5 for introduction of synthetic resin, such as molten polycarbonate resin, from a injection moulding machine into the mould cavity 4. A resin injection port 6 is bored through the sprue bushing 5. The molten synthetic resin, supplied from the injection moulding machine, is injected into the mould cavity 4 through the resin injection port 6.

A stamper 7 to mould the pattern of recesses and lands corresponding to the information signals, or pits, and a pre-groove constituting a recording track(s), is loaded on a surface of the fixed mould 1 defining the mould cavity 4. The stamper 7 is in the form of a disc having a central aperture 7a and is attached to the fixed metal mould by having the rim of the central aperture 7a supported by an inner stamper holder 8 and by having its outer periphery supported by an outer stamper holder 9.

The inner stamper holder 8, supporting the rim of the central aperture 7a at an inner edge of the stamper 7, is loaded on the fixed metal mould 1 by being fitted to the outer periphery of a stamper holder support 10 which is fitted to an outer side of the sprue bushing 5. An annular stamper supporting pawl 11 is formed at a radially outer edge of the stamper holder 8 to support the rim of the central aperture 7a of the stamper 7.

The inner stamper holder 8 is pressed and supported against a lateral surface 13a of a flange 13 of the stamper holder support 10 by a stamper holder fixing unit 12 which is passed through the inside of the fixed metal support 1. The inner stamper holder fixing unit 12 is made up of a holder fixing lever 14 traversing the fixed metal mould 1, a threaded part 15 connected to the holder fixing lever 14 and to reciprocate the holder fixing lever 14 in the directions shown by arrows A and B in Figure 1, and a knob 16 to rotate the threaded part 15. A wedge-shaped engaging supporting part 17 having an inclined lateral face is formed at a distal end of the holder fixing lever 14. The engaging supporting part 17 is engaged in a wedge-shaped mating engaging recess 18 formed on an outer lateral side of the inner stamper holder 8.

In the above-described construction of the inner stamper holder fixing unit 12, the threaded part 15 is rotated by means of the knob 16 to introduce the holder fixing lever 14 in the direction of arrow A in Figure 1 progressively to engage the wedge-shaped engaging supporting part 17 in the mating wedge-shaped engaging recess 18 to cause the inner stamper holder 8 to bear against the flange 13 of the stamper holder support 10. The stamper 7, having its inner edge supported by the stamper-supporting pawl 11, is loaded in position by being thrust and supported against a stamper contact surface 1a of the fixed metal mould 1.

The fixed metal mould 1 is provided with an inner stamper holder releasing unit 19 to release the pressure support of the stamper 7 relative to the fixed metal mould 1 by the inner stamper holder 8. Similarly to the above-described inner stamper fixing unit 12, the inner stamper holder releasing unit 19 is made up of a holder releasing lever 20 traversing the fixed metal mould 1, a threaded part 21 connected to the holder releasing lever 20 and to reciprocate the holder releasing lever 20 in the directions shown by arrows D and E in Figure 1, and a knob 22 to rotate the threaded part 21. A wedge-shaped releasing part 23 having an inclined lateral face is formed at a distal end of the releasing lever 20. The releasing part 23 is engaged in a notch-shaped engaging surface 24 formed on an end face of the inner stamper holder 8.

To dismount the inner stamper holder 8 fitted on the outer periphery of the stamper holder support 10 to detach the stamper 7 from the fixed metal mould 1, the holder fixing lever 14 is retracted in the direction shown by arrow B in Figure 1 to disengage the engaging supporting part 17 from the engaging recess 18. The threaded part 21 is then rotated by means of the knob 22 to advance the holder releasing lever 20 in a direction shown by the arrow D in Figure 1 progressively to engage the releasing part 23 with the inclined surface 24 to move the inner stamper holder 8 in the direction shown by the arrow F in Figure 1 to release the stamper from the stamper supporting pawl 11. The stamper 7 may now be detached from the fixed metal mould 1.

The movable metal mould 2, arranged facing the fixed metal mould 1 and movable towards and away from the fixed metal mould 1, is provided with a sleeve 25 which is reciprocably mounted at the centre of the mould cavity 4 to release a moulded disc substrate 30. A punch 26 to punch a centre hole 30a in the disc substrate 30 is reciprocably mounted at the centre of the sleeve 25.

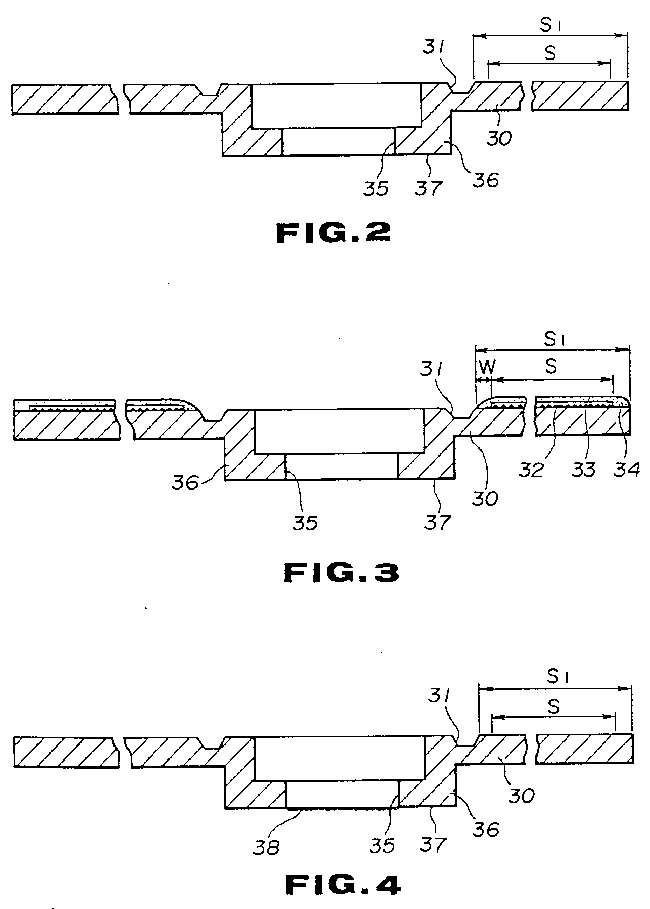

To mould the disc substrate 30, using the above-described metal mould device, the movable mould 2 is caused to approach the fixed metal mould to establish a mould clamping state. In this mould clamping state, molten synthetic resin, such as molten polycarbonate resin, supplied from the injection moulding machine, in injected and charged into the mould cavity 4 via the resin injection port 6 of the sprue bushing 5. The movable mould 2 is caused to approach closer to the fixed metal mould 1 to compress the synthetic resin charged into the mould cavity 4 under cooling to mould the disc substrate 30 corresponding in shape to the mould cavity 4. The punch 26 is then moved to punch the centreing aperture. The movable mould 2 is moved away from the fixed mould 1 to open the mould, at the same time as the sleeve 25 is projected towards the fixed metal mould 1 to release the moulded disc substrate 30 from the metal mould 3. The disc substrate 30 is taken out of the metal mould 3, using a suitable take-out unit and forms the disc substrate 30 shown in Figure 2.

In the above-described conventional metal mould device, since the stamper 7 is caused to bear against the fixed metal mould 1 by the inner stamper holder 8 provided with the stamper supporting pawl 11 which supports the rim of the central aperture 7a, the operation of attaching the stamper 7 to the fixed metal mould 1 is complicated. That is, to attach the stamper 7 to the fixed metal mould, the inner stamper holder 8 is engaged in the stamper holder support 10 and the inner stamper holder fixing unit 12 is operated to shift the inner stamper holder 8 to thrust the stamper 7 against the fixed metal mould 1 by means of the stamper supporting pawl 11, resulting in a complicated stamper attachment operation.

On the other hand, if the machining tolerance of the inner stamper holder 8 or the stamper holder support 10 to which the inner stamper holder 8 is fitted is not maintained within a narrow limit, the centre of the stamper 7 may be offset with respect to the centre of the disc substrate 30 to be moulded. If the centre of the stamper 7 is not in correct registration with the centre of the disc substrate 30, the centre of the pre-groove to form the concentric or spiral recording track(s) or pits on the major surface of the disc substrate 30 by the stamper 7 is offset from the centre of the disc substrate 30, so that the moulded product cannot be used as a disc substrate for an optical disc.

Also the stamper 7 is caused to bear against the fixed metal mould 1 by the stamper supporting pawl 11 of the inner stamper holder 8, so that, if the thrusting force exerted by the stamper supporting pawl 11 is excessive, the stamper 7 tends to be distorted or deformed, so that the rate of rejected products is likely to be increased.

The metal mould is complicated in structure by the provision of the inner stamper holder fixing unit 12 to fix and support the inner stamper holder 8 or the inner stamper holder releasing unit 19 to detach the inner stamper holder 8 from the fixed metal mould 1.

In the above-described arrangement in which the rim of the central aperture 7a of the stamper 7 is supported by the stamper supporting pawl 11 of the inner stamper holder 8 to attach the stamper 7 to the fixed metal mould 1, the stamper supporting pawl 11 protrudes towards the disc substrate moulding surface 7a of the stamper 7, so that the entire area of the moulding surface 7a cannot be utilized effectively. Thus, an annular groove 31 having a width corresponding to the stamper supporting pawl 11 is formed on an inner periphery of the disc substrate 30, as shown in Figure 2, so that a signal recording region S in which a pre-groove to form the pits or recording track(s)is formed cannot be extended to an area S₁ at an innermost region of the disc substrate 30.

Also, when the disc substrate 30 is formed as an optical disc, a reflective film or a signal recording layer 33 is deposited in the signal recording area S of the disc substrate 30 in which the pits are or the pre-groove is formed, as shown in Figure 3. A protective film 34 formed of a synthetic resin is deposited on the reflective film or the signal recording layer 33. The function of the protective film 34 is to prevent air or moisture from making contact with and attacking the reflective film or the signal recording layer 33.

Consequently, the protective film 34 needs to be firmly deposited on the disc substrate 30 so as not to be peeled off from the disc substrate 30. Also, the protective film 34 needs to cover the reflective film or the signal recording layer 33 with a thickness large enough to prevent intrusion of air or moisture into the reflective film or the signal recording layer 33.

However, if the disc substrate 30 is designed for a small-sized optical disc such that the signal recording region 32 is extended to the innermost area of the disc, the annular groove 31 is formed of a larger width at the inner side of the disc substrate 30, so that the protective film 34 at the innermost side of the disc substrate 30 can be deposited on the planar major surface of the disc substrate 30 only by a narrow width W. Consequently, the reflective film or the signal recording layer 33 cannot be covered positively by the protective layer 34 so that the reflective film or the signal recording layer 33 cannot be reliably protected against chemical attack by air or moisture.

The disc substrate 30 has a centreing aperture 35 engaged by a centreing member provided on a disc table of a disc rotating and driving unit which rotates and drives the optical disc prepared from the disc substrate 30. An annular projection or boss 36 defining the centreing aperture 35 is formed at a surface of the disc substrate 30 opposite to the surface on which the signal recording layer 33 is formed. The function of the projection 36 is to set the loading height of the disc on the disc table as well as to permit disc rotation in a horizontal position with respect to the centre of rotation of the disc table. Consequently, the end face of the projection 36 functions as a reference plane 37 to enable the disc to be attached to the disc table in a horizontal position with respect to the centre of rotation, so that it is a planar surface to maintain correct horizontality with respect to the centre of rotation.

The centreing aperture 35 provided in the disc substrate 30 is punched by a punch reciprocated in the mould cavity of the metal mould device. The aperture 35 is usually punched by actuating the punch immediately after the disc substrate 30 is moulded by injecting the synthetic resin into the mould cavity. If the centreing aperture 35 is punched while the synthetic resin injected into the mould cavity is still in the molten state and is not completely cured, punching burrs 38 tend to be produced in the proceeding direction of the punch.

If these burrs 38 are produced on the loading reference surface 37 at the end of the projection 36 or on the loading reference surface at the inner surface of the centreing aperture 35 engaged by the centreing member, the centreing aperture 35 will have less than true circularity and the reference surface 37 will not be planar, as a result of which the optical disc produced from the disc substrate 30 cannot be loaded onto a disc table with correct centreing and positioning and consequently the disc cannot be maintained in the correct horizontal state with respect to the centre of rotation of the disc table which gives rise to failure in recording or reproduction.

According to the invention there is provided a metal mould device to mould a disc substrate comprising;
a fixed metal mould,
a movable metal mould mounted to face the fixed metal mould, movable towards and away from the fixed metal mould and to define with the fixed metal mould a mould cavity,
a stamper mounted on at least one of the fixed metal mould and the movable metal mould and arranged within the mould cavity,
positioning means in the form of a sprue bushing and a stamper holder provided on the metal mould on which the stamper is mounted to set a loading position of the stamper, and
stamper supporting means provided on the metal mould on which the stamper is mounted to support the stamper by attraction;
characterised in that the stamper holder has a cylindrical engaging projection thereon to be tightly engaged in a central aperture of the stamper and an annular engagement guide provided at the distal side of the engaging projection being tapered towards its distal end to guide the stamper as the stamper is engaged with the engaging projection, no stamper supporting pawl being required to support the inner edge of the stamper.

Such a metal mould device can enable high-precision moulding of a disc substrate for a small-sized optical disc designed for high density recording of information signals, such as an optical disc having a diameter of 64 mm and capable of recording audio signals for 74 minutes.

In such a metal mould device to mould a disc substrate, an operation of loading a stamper to form pre-pits or a pre-groove to form the recording track on the disc substrate on the metal mould can be achieved easily and with correct positioning with respect to the metal mould.

In such a metal mould device pits or pre-groove to form recording track(s) may be moulded without offset or failure.

A signal recording region of a moulded optical disc may be formed over a wider area extending to an innermost region of the disc, a protective layer covering a reflective film or a signal recording layer may be deposited reliably and the reflective film or the signal recording layer may be protected reliably.

Such a method of forming a disc substrate can produce an information recording disc, in which the inner peripheral surface of the centreing aperture of the disc substrate engaged by a centreing member to centre the disc with respect to the centre of rotation of the disc table when the disc is set on the disc table and the horizontal loading reference surface of the disc with respect to the disc table may be formed highly accurately to permit the disc to be loaded in position on the disc table, and stable disc rotation can be ensured without producing failure in the recording or reproduction of information signals.

The stamper supporting means may be a vacuum suction unit or a magnetic suction unit taking advantage of a magnetic force of attraction.

The invention is diagrammatically illustrated by way of example in the accompanying drawings, in which:
Figure 1 is a schematic cross-sectional view showing a conventional metal mould device to mould a disc substrate;
Figure 2 is a cross-sectional view showing a disc substrate moulded by the conventional metal mould device;
Figure 3 is a cross-sectional view showing a protective layer formed to cover a signal recording layer deposited on a disc substrate moulded by the conventional metal mould device;
Figure 4 is an enlarged partial cross-sectional view showing a centreing aperture of a conventional magneto-optical disc;
Figure 5 is a longitudinal cross-sectional view showing a disc substrate moulded by a metal mould device to mould a disc substrate;
Figure 6 is a longitudinal cross-sectional view showing an optical disc produced from the disc substrate shown in Figure 5;
Figure 7 is a longitudinal cross-sectional view showing a previously proposed embodiment, and thus not according to the invention of a metal mould device to mould a disc substrate;
Figure 8 is a longitudinal cross-sectional view showing a modification of the previously proposed embodiment, and thus not according to the invention of the metal mould device shown in Figure 7;
Figure 9 is a longitudinal cross-sectional view showing an embodiment of a metal mould device to mould a disc substrate according to the invention;
Figure 10 is a cross-sectional view showing a disc substrate moulded by the metal mould device shown in Figure 9;
Figure 11 is a cross-sectional view showing a protective layer provided to cover a signal recording layer deposited on the disc substrate shown in Figure 10; and
Figure 12 is a longitudinal cross-sectional view showing a modification of the embodiment of the metal mould device shown in Figure 9.

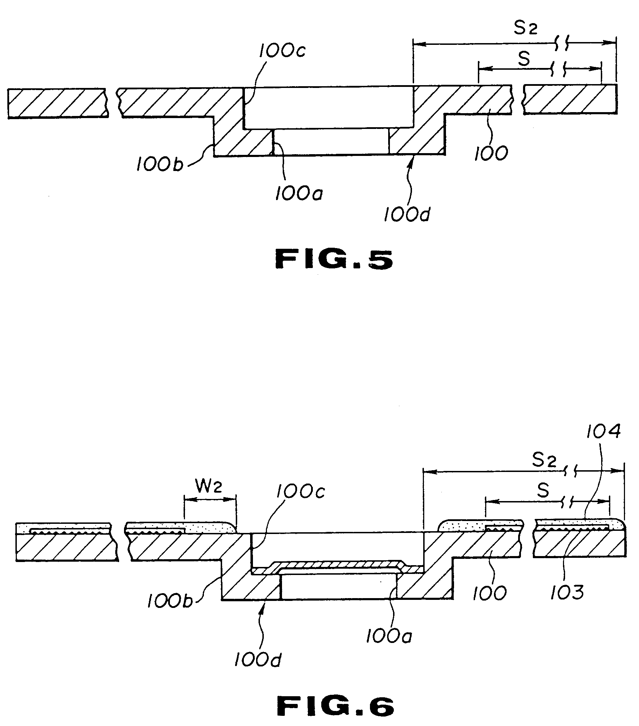

A previously proposed metal mould device is used to mould a disc substrate 100, shown in Figure 5, from a synthetic resin having light-transmitting properties, such as polycarbonate resin. The disc substrate 100 is used for fabricating an optical disc or the like shown in Figure 6. The optical disc may be a read-only disc or a magneto-optical disc in which the information signal once recorded on the disc may be re-recorded a desired number of times. The optical disc has a diameter of 64 mm and be capable of recording audio signals for a period of at least 74 minutes.

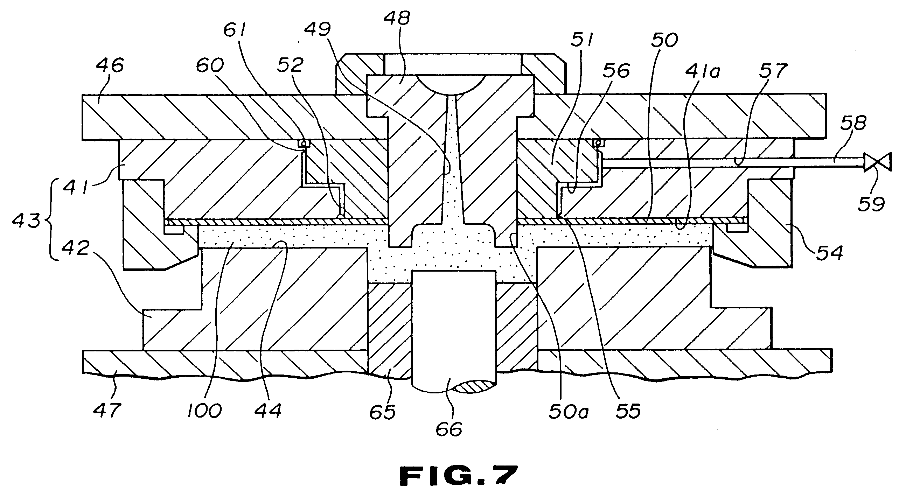

The disc substrate 100 is moulded by so-called injection moulding by means of a metal mould device which includes a metal mould 43 made up of a fixed metal mould 41 and a movable metal mould 42 facing the fixed metal mould 41, as shown in Figure 7. A mould cavity 44 corresponding in shape to the disc substrate 100 is defined between a stamper loading surface 41a at the lower surface of the fixed metal mould 41 and the upper surface of the movable metal mould 42 when the moulds 41 and 42 are caused to bear against each other. That is, the mould cavity 44 is substantially in the form of the disc to be moulded.

The fixed metal mould 41 is supported with respect to a fixed mounting block 46 by mounting means which are not shown. The movable metal mould 42, which can be moved towards and away from the fixed metal mould 41, is supported by suitable mounting means, not shown, on a movable mounting block 47 which is driven by suitable driving means, also not shown.

At the centre of the fixed metal mould 41, that is at the centre of the stamper loading surface 41a defining the mould cavity 44 of the fixed mould 41, an inserting through-hole is formed in a direction at right angles to the stamper loading surface 41a. A substantially toroidal-shaped sprue bushing supporting holder 51 is inserted into the through-hole of the fixed metal mould 41. A substantially cylindrical sprue bushing 48 is fitted into the sprue bushing supporting holder 51. The synthetic resin material, such as molten polycarbonate resin, is introduced from an injection device, not shown, into the mould cavity 44 through the sprue bushing 48 via a resin injection port 49. The sprue bushing 48 has its distal end protruding slightly below the stamper loading surface 41a of the fixed metal mould 41. That is, the sprue bushing 48 has its distal end introduced into the mould cavity 44 so that its end face into which the resin injection port 49 is opened is introduced into the mould cavity 44. The sprue bushing supporting holder 51 is stepped and has its forward end facing the mould cavity 44 reduced in diameter while having its rear end formed as a flange. The distal end of the sprue bushing supporting holder 51 is flush with the stamper loading surface 41a of the fixed metal mould 41 to delimit part of the inner surface of the mould cavity 44. The distal end of the sprue bushing supporting holder 51 is spaced apart from the stamper loading surface 41a by a small gap which is toroidal-shaped and surrounds the forward end of the sprue bushing supporting holder 51.

A stamper 50 to define a pattern of recesses and lands corresponding to information signals, or a pre-groove defining the recording track(s), is loaded on the stamper loading surface 41a delimiting the mould cavity 44 of the fixed mould 41. The stamper 50 is formed of nickel or like material and has the shape of a thin disc having a central aperture 50a.

The stamper 50 is positioned by having the distal end of the sprue bushing 48 fitted into its central aperture 50a. That is, the inside diameter of the central aperture 50a corresponds to the outside diameter of the sprue bushing 48. The stamper 50 has its outer peripheral region supported by an outer stamper holder 54 mounted on the fixed metal mould 41. The outer stamper holder 54 is substantially toroidal-shaped and mounted on the lower outer periphery of the fixed metal mould 41 to delimit the outer rim of the mould cavity 44.

The fixed metal mould 41 is provided with a stamper suction unit forming stamper suction means. The stamper suction unit can evacuate air from between the fixed metal mould 41 and the stamper 50 by a vacuum pump, not shown, via a suction slit 55 which is the small gap defined between the outer surface of the sprue bushing supporting ring 51 and the inner wall of the through-hole of the fixed metal mould 41. An air channel 56 is connected to the outside of the mould via an air duct 57 bored through the fixed metal mould 41. The air duct 57 extends radially with respect to the mould cavity 44 from the centre to the outer lateral surface of the fixed metal mould 41.

An air conduit 58 is mounted on the outer lateral side of the fixed metal mould 41 in communication with the air duct 57 and is connected to the vacuum pump, not shown, via a valve 59. When the valve 59 is open, the vacuum pump evacuates air from between the stamper loading surface 41a of the fixed metal mould 41 and the stamper 50 via the air conduit 58, the air channel 56, the air duct 57 and the suction slit 55 and discharges the air to outside. With the valve 59 closed, the space defined between the stamper loading surface 41a of the fixed metal mould 41 and the stamper 50 is hermetically sealed to outside in a state of reduced pressure. The stamper 50 is held by suction against the stamper loading surface 41a of the fixed metal mould 41. The movable metal mould 42, arranged facing the fixed metal mould 41 and movable towards and away from the fixed metal mould 41, is provided with a sleeve 65 which is provided at the centre of the mould cavity 44 and which can release the moulded disc substrate 100. A punch 66 for punching a centreing aperture 100a in a disc substrate 100 is reciprocably mounted at the centre of the sleeve 65.

The sleeve 65 is reciprocably supported with respect to the movable metal mould 42, and has its distal end facing the mould cavity 44 retracted slightly from the upper surface of the movable mould cavity 44 into the inside of the movable metal mould 42. The punch 66 has its distal end facing the mould cavity 44 extending slightly beyond the distal end of the sleeve 65.

To form the disc substrate 100 by the above-described metal mould device, the movable metal mould 42 is caused to bear against the fixed metal mould 41 to define the mould cavity 44. The molten synthetic material, such as polycarbonate resin, is injected and charged into the mould cavity 44 by the injection apparatus, not shown, via the resin injection port 49 of the sprue bushing 48. The resin material is caused to flow from the centre towards the periphery within the mould cavity 44. After a mould clamping operation of displacing the movable metal mould 42 towards the fixed metal mould 41 to compress the resin material charged into the mould cavity 44, the mould device is cooled. This causes the resin material charged into the mould cavity 44 to solidify to form the disc substrate 100 corresponding in shape to the mould cavity 44, as shown in Figure 5.

The punch 66 is then protruded towards the fixed metal mould 41 to punch the centreing aperture 100a. The movable metal mould 42 is displaced away from the fixed metal mould 41, while the sleeve 65 is protruded towards the fixed metal mould 41, by way of performing a mould-opening operation, to release the moulded disc substrate 100 from the metal mould 43. The disc substrate 100 is detached from the fixed metal mould 41 to complete the moulding of the disc substrate 100.

The disc substrate 100 has one of its major surface as a signal recording surface moulded by the stamper 50. A chuck plate attachment recess 100c is formed at a mid part of the major surface of the disc substrate 100. The chuck plate attachment recess 100c is moulded by the end part of the sprue bushing 48 intruding into the mould cavity 44. At a mid part of the other major surface of the disc substrate 100 is formed a ring-shaped boss 100b which has been moulded by the central through-hole in the movable metal mould 42 and the distal end of the sleeve 65 and which circumscribes the chuck plate attachment recess 100c. The outer peripheral surface of the boss 100b and the end face of the boss 100b moulded by the distal end of the sleeve 65 represent a reference surface 100d to define the horizontal position of the optical disc produced from the disc substrate 100.

In a read-only disc produced from the disc substrate 100, a pattern of recesses and lands 103, corresponding to information signals, is formed on one of the major surfaces of the disc substrate 100, as shown in Figure 6, and a reflective film formed of aluminum etc. is deposited on the pattern 103 by sputtering or vacuum deposition. The pattern 103 is formed by the stamper 50.

In a read-only disc produced from the disc substrate 100, a pre-groove 103 of the pattern defining a recording track(s) for recording information signals is formed on one of the major surfaces of the disc substrate 100, and a signal recording layer of a magnetic material is deposited on the pre-groove 103. The pre-groove 103 is formed by the stamper 50.

In this metal mould device to fabricate a disc substrate, the entire disc substrate moulding surface of the stamper facing the mould cavity 44 may be utilized effectively. That is, in the disc substrate 100, the entire extent of the major surface of the disc substrate 100 extending from its outer periphery as far as the rim of the chuck plate attachment recess 100c as indicated by arrow S₂ is a planar surface, on which the pattern of recesses and lands may be formed, as shown in Figure 6. That is, with the disc substrate 100, the area in which the signal recording region can be forced may be extended to the innermost area of the disc substrate 100.

On the major surface of the optical disc, produced from the disc substrate, a protective film 104 of a synthetic resin is deposited on the reflective film which is formed on the signal recording region comprising the pattern of recesses and lands 103 as indicated by arrow S in Figure 6. The function of the protective film 104 is to interrupt contact of moisture contained in air with the reflective film to prevent its corrosion. It is necessary for the protective film 104 to be thick enough to interrupt contact of the moisture in air with the reflective film and it is also necessary for the protective film to be deposited in tight contact with the disc substrate 100 so as not to be peeled from the disc substrate 100. With the present disc substrate 100, the width of a deposition region of the protective film 104 on the disc substrate 100, that is the distance from the inner periphery of the signal recording region to the rim of the chuck plate attachment recess 100c, may be increased to ensure intimate contact of the protective film 104 with the disc substrate 100 to ensure protection of the reflective film by the protective film 104.

With the optical disc produced from the disc substrate 100, the chuck plate is received within the chuck plate attachment recess 100c. The chuck plate is formed of a magnetic material, such as metal, in the form of a disc. The chuck plate is attracted by a magnet of a magnet chucking system of a recording/reproducing apparatus making use of the optical disc to hold the optical disc.

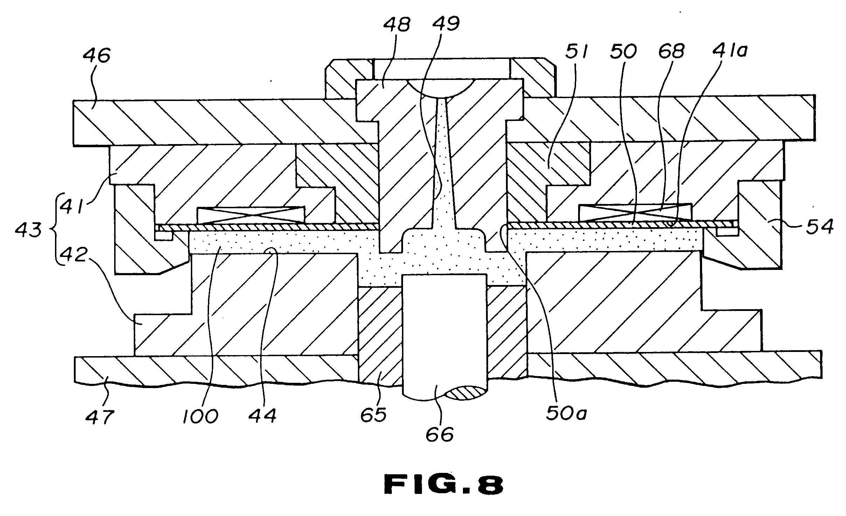

The stamper support means is not limited to the stamper suction unit employing the vacuum pump as shown in the above described embodiment. In a modification, shown in Figure 8, a magnet 68 which is arranged flush with the stamper loading surface 41a to form a part of the stamper loading surface 41a of the fixed metal mould 41 is used as the stamper support means.

In this mould device to fabricate a disc substrate, the stamper 50 is loaded on the fixed metal mould 41 by having its outer peripheral side supported by the outer stamper holder 54 and by having its major surface attracted and held by the magnet 68. If the magnet 68 is an electro-magnet, the stamper 50 may be detached more easily from the fixed metal mould 41 when desired.

If desired the stamper 50 may be loaded on the movable metal mould 42. In this case, a positioning projection, not shown, is provided on the movable metal mould 42 to engage in the central aperture 50a of the stamper 50 to position the stamper 50 by means of the positioning projection.

In the above-described metal mould device to fabricate a disc substrate, the stamper has the inner edge of its central aperture 50a positioned by the sprue bushing 48, while being attracted and supported by the stamper suction unit or by the magnet 68. In this manner, with the described metal mould device for moulding a disc substrate, the operation of attaching the stamper 50 to the fixed metal mould 41 is facilitated.

The stamper 50 can be accurately positioned by the sprue bushing 48, with its central region in accurate registration with the centre of the disc substrate 100 moulded by the metal mould device. Therefore, the disc substrate 100 may be moulded by the described metal mould device in a manner desirable for an optical disc without producing offsets of the centre of curvature of the spirally extending pattern of recesses and lands, or rows of pits, formed on one of the major surfaces of the disc substrate 100, from the centre of the disc substrate 100.

With the described metal mould device to fabricate a disc substrate, the moulded disc substrate is not distorted because the stamper 50 is attracted and supported by the stamper suction device or by the magnet 68. Consequently, with the described metal mould device to fabricate a disc substrate, a disc substrate 100 with desirable properties may be moulded, while the structure of the mould device may be simplified because the stamper 50 is attracted and supported by the stamper suction unit or by the magnet 68.

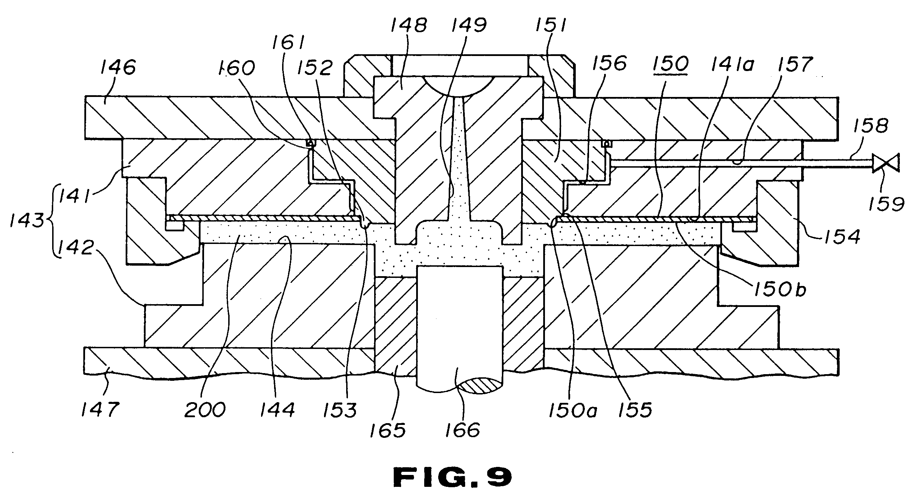

An embodiment of the metal mould device according to the invention to fabricate the disc substrate is hereinafter explained with reference to Figure 9.

In the above described previously proposed embodiment, the stamper 50 is loaded on the stamper loading surface 41a of the fixed metal mould 41 by having the central aperture 50a engaged with the distal end of the sprue bushing 48. However, a holder may be provided on the outer periphery of the sprue bushing to support the sprue bushing by the fixed metal mould and to support the stamper so that the stamper is loaded by this holder on the metal mould.

Similarly to the metal mould device of the previously proposed embodiment, the metal mould device of the first embodiment of the invention is, as shown in Figure 9, provided with a mould 143 made up of a fixed metal mould 141 and a movable metal mould 142 arranged facing the fixed metal mould 141. A mould cavity 144 corresponding in shape to a disc substrate 200 to be moulded is defined between the fixed metal mould 141 and the movable metal mould 142.

The fixed metal mould 141 is supported by a fixed mounting block 146 via mounting means, not shown. The movable metal mould 142, movable towards and away from the fixed metal mould 141, is supported by mounting means (not shown) on a movable mounting block 147 driven by driving means (not shown).

The fixed metal mould 141 includes, at the centre of the mould cavity 144, a sprue bushing 148 to cause molten synthetic resin, such as polycarbonate resin, from the injection moulding machine, to flow into the mould cavity 44. The sprue bushing 148 has a resin injection port 149. The molten synthetic resin, supplied from the injection moulding machine is injected into the mould cavity 144 via the resin injection port 149.

A stamper 150 to mould the pattern of recesses and lands, or so-called pits, corresponding to information signals, or a pre-groove to define a recording track(s), is loaded on the surface of the fixed metal mould 141 defining the mould cavity 144. The stamper 150 is shaped as a disc having a central aperture 150a.

The stamper loading surface 141a on which the stamper 150 of the fixed metal mould 141 is loaded is a planar surface having a high degree of planarity.

A stamper holder 151 to position and support the stamper 150 is fitted on the outer periphery of the sprue bushing 148 arranged at the centre of the fixed metal mould 141. The stamper holder 151 has an engaging projection 152 engaged in the central aperture 150a of the stamper 150 at a distal side thereof by which the stamper holder intrudes into the mould cavity 144. The engaging projection 152 is formed as a cylinder having an outside diameter substantially equal to the diameter of the central aperture 150a so that the projection 152 is tightly engaged in the central aperture 150a of the stamper 150. That is, an outer peripheral surface of the engaging projection 152 functions as a loading reference surface to set the loading position of the stamper 150 loaded on the fixed metal mould 141. Consequently, the stamper 150 may be loaded on the fixed metal mould while being centred relative to the fixed metal mould by engaging the engaging projection 152 in the central aperture 150a.

An annular engagement guide 153, tapered towards its' distal end to guide the stamper 150 as the stamper is engaged with the engaging projection 152, is provided at the distal side of the engaging projection 152.

An outer stamper holder 154 supporting the outer periphery of the stamper 150 which is loaded on the fixed metal mould 41 by engaging the engaging projection 152 of the stamper holder 151 in the centreing aperture 150a is provided on the outer periphery of the fixed metal mould 141. Consequently, the stamper 150 is loaded on the stamper loading surface 141a of the fixed metal mould 141 by having the engaging projection 152 at the distal end of the stamper holder 151 engaged in the central aperture 150a and by having the outer periphery of the stamper 150 supported by the outer stamper holder 154.

Similarly to the previously described embodiments of metal mould device, the metal mould device of the invention is also provided with a stamper suction unit so that the stamper 150 is tightly supported by the stamper loading surface 141a of the fixed metal mould 141 by vacuum suction.

The stamper suction unit is designed to cause the stamper 150 to bear against the stamper loading surface 141a by evacuating air from between the stamper 150 and the stamper loading surface 141a of the fixed metal mould 141 by means of an air suction pump, not shown, via an annular gap 155 facing the stamper loading surface 141a between the fixed metal mould 141 and the stamper holder 151 when the stamper holder 151 is placed in position to be fitted on the fixed metal mould 141.

The stamper suction unit is made up of an air channel 156 defined on the outer periphery of the stamper holder 151 in communication with the annular gap 155, an air duct 157 formed in the fixed metal mould 141 in communication with the air channel 156 and the vacuum pump, not shown, connected to the air duct 157 via an air conduit 158 and a changeover valve 159.

In operation of the stamper suction unit, the vacuum pump is driven, with the changeover valve 159 open, to draw air from the annular gap 155 between the stamper 150 and the stamper loading surface 141a of the fixed mould 141 via the air channel 156 and the air duct 157 which are in communication with each other.

Since the stamper 150 is sucked onto the stamper loading surface 141a by utilizing vacuum suction effect, the stamper 150 is caused to bear against the stamper loading surface 141a under a substantially uniform force of suction so that the stamper 150 may be loaded on the fixed mould 141 without becoming distorted or deformed.

An O-ring 161 for inhibiting air leakage is tightly fitted in an annular gap 160 facing the fixed mounting base block 146 between the stamper holder 151 and the fixed metal mould 141.

The movable metal mould 142, mounted facing the fixed metal mould 141 and movable towards and away from the fixed metal mould 141, is provided with a reciprocable sleeve 165 which is positioned at the centre of the mould cavity 144 to release the moulded disc substrate 200. A punch 166 to punch a centreing aperture 200a in the disc substrate 200 is reciprocably mounted at the centre of the sleeve 165.

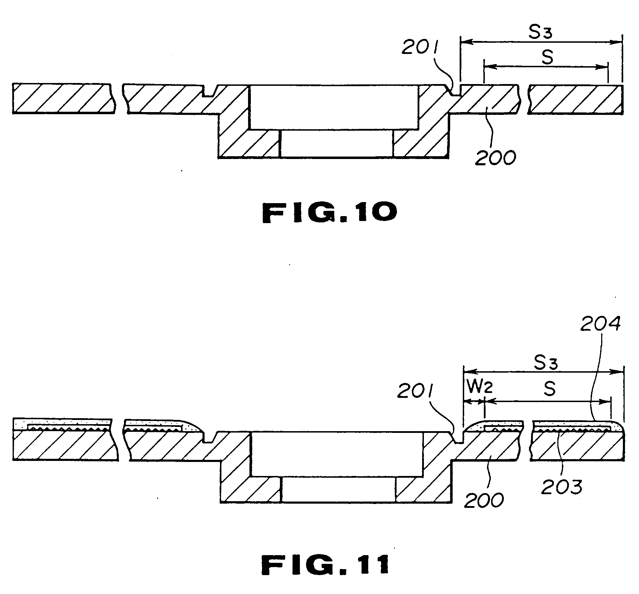

To mould the disc substrate 200 using the above-described metal mould device, the movable mould 142 is caused to approach the fixed mould 141 to establish a mould clamping state. In such a mould clamping state, molten synthetic resin, such as polycarbonate, supplied from an injection moulding machine (not shown) is injected and charged into the mould cavity 144 via the resin injection port 149 of the sprue bushing 148. The movable mould 142 is moved further towards the fixed metal mould 141 to compress the resin charged into the mould cavity 144 by way of a mould compressing operation to mould the disc substrate 200 corresponding in shape to the mould cavity 144. The punch 166 is moved to punch the centreing aperture 200a in the disc substrate 200. The movable mould 142 is moved away from the fixed metal mould 141 by way of a mould opening operation, at the same time that the sleeve 165 is protruded towards the fixed metal mould 141 to effect the moulded disc substrate 200 from the metal mould 143. The disc substrate is taken out of the metal mould 143 by a take-out device (not shown) to complete the disc substrate 200 shown in Figure 10.

In the metal mould device of this embodiment, since the stamper 150 is caused to bear against the fixed metal mould under the vacuum suction effect, there is no necessity for a stamper supporting pawl which projects towards a disc substrate moulding surface 150b to support the inner periphery of the stamper 150 as in the above-mentioned conventional metal mould device. Only an annular groove 201 to receive the engagement guide 153 is formed on the inner periphery of the moulded disc substrate 200, as shown in Figure 10.

In this manner, the moulding surface of the stamper 150 may be used to mould the disc substrate 200 as far as the rim of the central aperture 150a of the stamper 150, as shown in Figure 9, so that, as shown in Figure 10, a signal recording region s in which the pre-groove for the recording track(s) or pits may be formed may extend over a region S₃ reaching the inner periphery of the disc substrate 200.

In the metal mould device of this embodiment, the moulding surface of the stamper 150 may be utilized as far as the rim of the central aperture 150a of the stamper 150. Consequently, if the disc substrate 200 is designed for a small-sized optical disc, and the signal recording region s is formed as far as the inner periphery of the disc substrate 200, a protective film 204 covering a reflective film or the recording layer 203 deposited on the signal recording region s may be deposited on the planar major surface at an inner periphery of the disc substrate 200 over an extent W₂ shown in Figure 11 which is markedly wider than in the conventional mould device. The result is that the reflective film or the signal recording layer 203 may be reliably covered by the protective film 204 to protect the reflective film or the signal recording layer 203 from corrosion.

In this embodiment as illustrated, the stamper suction unit to cause the stamper 150 to bear against the fixed metal mould 141 under the suction effect of vacuum is used. However, the stamper suction unit may also be so designed that the stamper 150 formed of a magnetic material, such as nickel, may be caused to bear against the stamper loading surface 141a by magnetic attraction of the stamper towards the fixed metal mould 141.

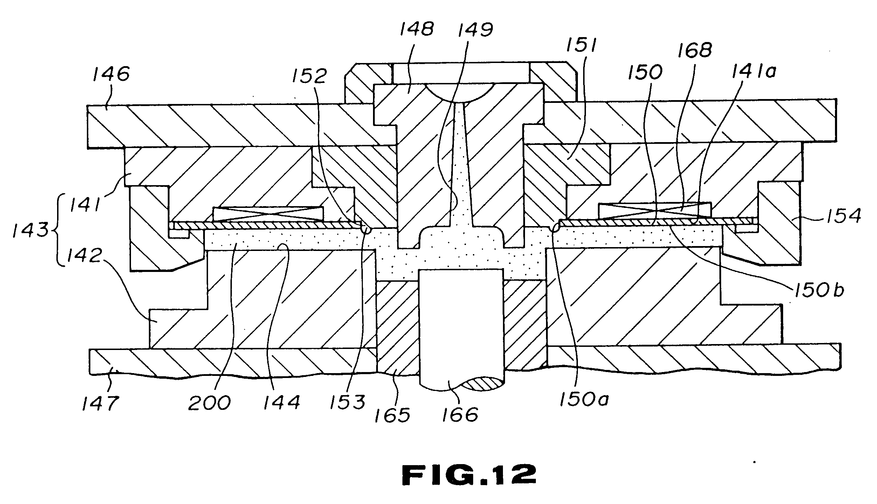

A stamper attraction unit utilizing the force of magnetic attraction includes an electro-magnet or a permanent magnet 168 embedded in the portion of the fixed metal mould 141 facing the stamper loading surface 141a, as shown in Figure 12.

In the embodiment illustrated, the stamper 150 is provided on the fixed metal mould 11. However, if desired the metal mould device may have the stamper 150 loaded on the movable metal mould 142. When the stamper 150 is attached to the movable metal mould 142, the stamper holder 151 having its engagement projection 152 engaged in the centreing aperture 150a of the stamper 150 is provided at the movable metal mould 142, while the stamper suction unit is also provided at the movable mould 142.

## Claims

1. A metal mould device to mould a disc substrate comprising;
a fixed metal mould (141),
a movable metal mould (142) mounted to face the fixed metal mould (141), movable towards and away from the fixed metal mould (141) and to define with the fixed metal mould (141) a mould cavity (144),
a stamper (150) mounted on at least one of the fixed metal mould (141) and the movable metal mould (142) and arranged within the mould cavity (144),
positioning means in the form of a sprue bushing (148) and a stamper holder (151) provided on the metal mould (141) on which the stamper (150) is mounted to set a loading position of the stamper (150), and
stamper supporting means (155 to 159, 168) provided on the metal mould on which the stamper is mounted to support the stamper by attraction;
characterised in that the stamper holder (151) has a cylindrical engaging projection (152) thereon to be tightly engaged in a central aperture (150a) of the stamper and an annular engagement guide (153) provided at the distal side of the engaging projection (152) being tapered towards its distal end to guide the stamper (150) as the stamper (150) is engaged with the engaging projection (152), no stamper supporting pawl (11) being required to support the inner edge of the stamper (150).

2. A metal mould device according to claim 1, including holding means (54, 154, 228) to hold the outer rim of the stamper (50, 150, 226) with respect to the metal mould on which the stamper is mounted.

3. A metal mould device according to claim 1, wherein the stamper is mounted on the fixed metal mould (141).

4. A metal mould device according to claim 1, wherein the stamper supporting means includes an annular passage (155) formed in the metal mould on which the stamper (150) is mounted and a vacuum pump connected to the annular passage (155).

5. A metal mould device according to claim 1, wherein the stamper supporting means comprises a magnetic attraction device (168) provided in the metal mould on which the stamper (150) is mounted.

## Patentansprüche

1. Metallgießvorrichtung zum Gießen eines scheibenförmigen Substrats, welche umfaßt:
eine feststehende Metallgießform (141)
eine bewegbare Metallgießform (142), die gegenüber der feststehenden Metallgießform (141) angebracht ist und auf die feststehende Metallgießform (141) zu und von ihr weg bewegbar ist und zusammen mit der feststehenden Metallgießform (141) einen Gießhohlraum (144) definiert,
eine Stanzvorrichtung (150), die an mindestens einer der feststehenden Metallgießform (141) und der bewegbaren Metallgießform (142) angebracht und in dem Gießhohlraum (144) angeordnet ist,
Positionierungsmittel in Form einer Angießbuchse (148) und eine Stanzvorrichtungshalterung (151), die an der Metallgießform (141), auf der die Stanzvorrichtung (150) angebracht ist, vorgesehen sind, um für die Stanzvorrichtung (150) eine Ladeposition festzulegen, und
Stanzvorrichtungsträgermittel (155 - 159, 168), die auf der Metallgießform, auf der die Stanzvorrichtung angebracht ist, vorgesehen sind, um die Stanzvorrichtung durch Anziehung zu stützen,
dadurch gekennzeichnet, daß die Stanzvorrichtungshalterung (151) einen zylindrischen Eingriffsvorsprung (152) aufweist, um mit einer zentralen Öffnung (150a) der Stanzvorrichtung im festsitzenden Eingriff zu stehen, und ein ringförmiges, an der distalen Seite des Eingriffsvorsprunges (152) befindliches Eingriffsleitungsmittel (153), das sich gegen dessen distales Ende verjüngt, um die Stanzvorrichtung (150) zu leiten, wenn sie mit dem Eingriffsvorsprung (152) in Eingriff gebracht wird, wobei keine Stanzvorrichtungs-Trägerklinke (11) erforderlich ist, um den inneren Rand der Stanzvorrichtung (150) zu stützen.

2. Metallgießvorrichtung nach Anspruch 1, welche Haltemittel (54, 154, 228) enthält, um den äußeren Umfang der Stanzvorrichtung (50, 150, 226) bezüglich der Metallgießform, auf der die Stanzvorrichtung angebracht ist, zu halten.

3. Metallgießvorrichtung nach Anspruch 1, wobei die Stanzvorrichtung auf der feststehenden Metallgießform (141) befestigt ist.

4. Metallgießvorrichtung nach Anspruch 1, wobei das Stanzvorrichtungsträgermittel einen ringförmigen Durchgang (155) beinhaltet, der in der Metallgießform gebildet ist, auf der die Stanzvorrichtung (150) angebracht ist, und eine Vakuumpumpe, die mit dem ringförmigen Durchgang (155) verbunden ist.

5. Metallgießvorrichtung nach Anspruch 1, bei der das Stanzvorrichtungsträgermittel eine Magnetanziehungsvorrichtung (168) umfaßt, die in der Metallgießform, auf der die Stanzvorrichtung (150) angebracht ist, befestigt ist.

## Revendications

1. Dispositif de moule métallique destiné à mouler un substrat de disque, comportant;
un moule métallique fixe (141),
un moule métallique mobile (142) monté de façon à faire face au moule métallique fixe (141), mobile vers et à l'écart du moule métallique fixe (141) et destiné à définir avec le moule métallique fixe (141) une cavité de moule (144),
une empreinte (150) montée sur au moins le moule métallique fixe (141) ou le moule métallique mobile (142) et disposée à l'intérieur de la cavité de moule (144),
des moyens de positionnement sous la forme d'un manchon de coulée (148) et d'un support d'empreinte (151) prévus sur le moule métallique (141) sur lequel est montée l'empreinte (150) afin de déterminer une position de chargement de l'empreinte (150), et
des moyens de support d'empreinte (155 à 159, 168) prévus sur le moule métallique sur lequel est montée l'empreinte afin de supporter l'empreinte par attraction;
caractérisé en ce que le support d'empreinte (151) possède une saillie d'engagement cylindrique (152) destinée à être engagée intimement dans une ouverture centrale (150a) de l'empreinte et un guide d'engagement annulaire (153) prévu au niveau du côté distal de la saillie d'engagement (152) qui est conique en direction de son extrémité distale afin de guider l'empreinte (150) lorsque l'empreinte (150) est engagée avec la saillie d'engagement (152), aucune griffe de support d'empreinte (11) n'étant nécessaire pour supporter le bord interne de l'empreinte (150).

2. Dispositif de moule métallique selon la revendication 1, comprenant des moyens de maintien (54, 154, 228) destinés à maintenir le pourtour extérieur de l'empreinte (50, 150, 226) par rapport au moule métallique sur lequel est montée l'empreinte.

3. Dispositif de moule métallique selon la revendication 1, dans lequel l'empreinte est montée sur le moule métallique fixe (141).

4. Dispositif de moule métallique selon la revendication 1, dans lequel les moyens de support d'empreinte comprennent un passage annulaire (155) formé dans le moule métallique sur lequel est montée l'empreinte (150) et une pompe à vide reliée au passage annulaire (155).

5. Dispositif de moule métallique selon la revendication 1, dans lequel les moyens de support d'empreinte comportent un dispositif d'attraction magnétique (168) prévu dans le moule métallique sur lequel est montée l'empreinte (150).
